# EUROPÄISCHE PATENTANMELDUNG

(11) **EP 3 252 553 A1**
(43) Veröffentlichungstag der Anmeldung: **06.12.2017**
(21) Anmeldenummer: 16172950.4
(22) Anmeldetag: 03.06.2016
(51) Int. Cl.: G05B 19/418, G06F 21/64

(54) **ENGINEERING-VERFAHREN SOWIE -WERKZEUG FÜR EINE VERFAHRENS- ODER PROZESSTECHNISCHE ANLAGE**

(71) Anmelder: Siemens Aktiengesellschaft, 80333 München (DE)
(72) Erfinder: Drumm, Oliver, 76344 Eggenstein-Leopoldshafen (DE); Palmin, Anna, 76187 Karlsruhe (DE)

(57) **Zusammenfassung**

Die Erfindung betrifft ein Engineering-Verfahren sowie ein Engineering-Werkzeug für eine verfahrens- oder prozesstechnische Anlage (1). Mittels des Engineering-Werkzeugs (4) wird ein Anlagenplan in Form elektronischer Daten erstellt, welche die Anlage (1) und Komponenten (6...8, 11...14) der Anlage (1) beschreiben. Zur Verwendung bei der Erstellung des Anlagenplans werden Produktdaten (11'...14'), welche vorbestimmte technische Eigenschaften der Komponenten (11...14) beschreiben, bereitgestellt. Damit die Produktdaten (11'...14') in den Planungsphasen nicht manipuliert werden können, werden sie durch eine kryptographische Methode zur Ermöglichung einer Überprüfung ihrer Integrität und/oder Originalität geschützt. Durch einen Vergleich mit Produktdaten (11"...14"), die in realen Komponenten (11...14) der Anlage (1) hinterlegt sind, können vorteilhaft Abweichungen zwischen Planung und Realität detektiert werden, die sonst zu eventuell schwerwiegenden Folgen führen könnten.

## Beschreibung

Engineering-Verfahren sowie -Werkzeug für eine verfahrens- oder prozesstechnische Anlage

Die Erfindung betrifft ein Engineering-Verfahren für eine verfahrens- oder prozesstechnische Anlage, ein entsprechendes Engineering-Werkzeug sowie eine Komponente zur Verwendung bei einem derartigen Engineering-Verfahren.

Um das Engineering einer Automatisierung einer verfahrens- oder prozesstechnischen Anlage, im Folgenden kurz Anlage genannt, durchzuführen, wird mittels eines Engineering-Werkzeugs üblicherweise in einem ersten Schritt die Struktur der Anlage erfasst und mittels des Werkzeugs ein R&I-Fließbild, häufig in englischer Sprache auch als Piping and Instrumentation Diagram oder P&ID bezeichnet, der Anlage oder von Teilen der Anlage durch Verknüpfung von graphischen Prozessobjekten erstellt. Die graphischen Prozessobjekte repräsentieren die für den Betrieb der Anlage erforderlichen Komponenten oder Komponentengruppen, zum Beispiel Sensoren, Motoren, Pumpen, Ventile, Rohrleitungen, Tanks etc. Sie sind zumeist als standardisierte Bausteine in Bibliotheken enthalten und werden mittels eines geeigneten Editors auf einer Bedienoberfläche des Werkzeugs nach technologischen Gesichtspunkten platziert und miteinander verschaltet. Ergebnis ist ein Anlagenplan in Form elektronischer Daten, welche die Anlage und Komponenten der Anlage beschreiben. Ein geeignetes Engineering-Werkzeug ist zum Beispiel COMOS der Siemens AG, welches den Planer bei der Erstellung des digitalen Anlagenabbilds unterstützt, und zwar auch schon bevor die Anlage real errichtet und in Betrieb genommen wird.

Aus den Funktionen, welche die verschiedenen Komponenten in der Anlage erfüllen sollen, ergeben sich die jeweiligen Geräteanforderungen, welche zur Realisierung der Funktionen vorgesehene Geräte erfüllen müssen. Die Geräteanforderungen werden üblicherweise in einem so genannten PLT-Stellenblatt (PLT: Prozessleittechnik) beschrieben. Auf der Basis dieser Geräteanforderungen werden Echtgeräte, das heißt Geräte, welche in der realen Anlage zum Einsatz kommen, durch Konfiguration der Anlage festgelegt. Jedem Echtgerät ist eine technische Beschreibung zugeordnet, welche technische Produktdaten des jeweiligen Geräts enthält. Diese Produktdaten beschreiben vorbestimmte technische Eigenschaften des jeweiligen Geräts und werden dem Anlagenplaner vom Gerätehersteller zur Verfügung gestellt, damit dieser sie im Engineering-Werkzeug bei der Erstellung des Anlagenplans, insbesondere bei der Geräteauswahl, berücksichtigen kann. Die Produktdaten werden häufig auch als Produktmerkmale oder Stammdaten bezeichnet und werden somit dem Engineering-Werkzeug bereitgestellt und auch gepflegt, damit immer korrekte und aktuelle Daten bereitstehen. Häufig können die Produktdaten online vom jeweiligen Gerätehersteller bezogen werden.

Für viele Komponenten, die für die Automatisierung von Anlagen benötigt werden, unter anderem für speicherprogrammierbare Steuerungen, Netzwerkkomponenten, Feldgeräte und PC-basierte Komponenten, sind bereits derartige Produktdaten verfügbar. Produktdaten können neben den einfachen Merkmalen wie Höhe, Breite und Tiefe auch komplexe Eigenschaften wie 3D-Modelle, Simulationsmodelle des Geräteverhaltens, Fotos, Zulassungen, Gerätebeschreibungen in Form einer GSD, EDD oder FDI usw. umfassen.

In nachteiliger Weise ist es möglich, die Produktdaten in den Phasen des Engineerings, zum Beispiel bei der Geräteauswahl in der Konfiguration der Anlage oder bei der Einbindung in ein Leitsystem, unbemerkt zu verändern. Dabei können insbesondere ungewollte und vom Anwender unbemerkte Veränderungen von Produktdaten zu Planungsfehlern führen, deren Konsequenzen erst zum Zeitpunkt der Inbetriebnahme oder im Betrieb der Anlage auffallen. Die Auswirkungen derartiger Veränderungen können schwerwiegend sein. Beispielsweise kann eine falsche Angabe des Druckbereichs, wenn die Eigenschaft "maximaler Druck Pₘₐₓ" anstatt des korrekten Werts 10 bar auf den falschen Wert 50 bar verändert wird, zum Platzen eines Prozessanschlusses eines Geräts führen, wenn dieser nicht für den höheren, in der Anlage auftretenden Druck ausgelegt war.

Der Erfindung liegt die Aufgabe zugrunde, ein Engineering-Verfahren, ein Engineering-Werkzeug sowie eine Komponente zur Verwendung bei einem derartigen Engineering-Verfahren zu schaffen, mit welchen das Fehlerrisiko des Engineerings verringert und die Zuverlässigkeit des Anlagenbetriebs verbessert werden können.

Zur Lösung dieser Aufgabe, weist das neue Engineering-Verfahren die in Anspruch 1, das neue Engineering-Werkzeug die in Anspruch 4 und die neue Komponente zur Verwendung in einem derartigen Engineering-Verfahren die in Anspruch 5 genannten Merkmale auf. Vorteilhafte Weiterbildungen der Erfindung sind in den abhängigen Ansprüchen beschrieben.

Die Erfindung hat den Vorteil, dass die Produktdaten in den verschiedenen Phasen des Engineerings gegen Veränderungen, die eventuell von einem Anwender unbemerkt bleiben, geschützt werden. Versehentliche oder vorsätzliche Manipulationen von Produktdaten werden vermieden. Dies führt, wie an dem oben erwähnten Beispiel eines aufgrund Überdrucks berstenden Prozessanschlusses verdeutlicht, zu einer Verringerung des Risikos von Schäden an Mensch und Maschine beim Betrieb der Anlage. Es wird somit ein wichtiger Beitrag zur Gewährleistung der Systemintegrität als eines der wesentlichen Kernelemente der Industrial Security geleistet. Dabei versteht man unter der Systemintegrität im Kontext der Industrial Security den Schutz eines in der Regel aus diversen Einzelkomponenten, beispielsweise Geräten und Applikationen, zusammengesetzten Systems gegen unbemerkte, unautorisierte Veränderungen. Durch die verbesserte Systemintegrität kann eine höhere Verfügbarkeit der Anlage, welche durch das Engineering-Verfahren erhalten wurde, im späteren Betrieb erreicht werden. Der Schutz der Produktdaten vor einer Manipulation kann durch Nachweis ihrer Originalität und Echtheit erhalten werden, wobei jede dazu geeignete kryptographische Methode angewandt werden kann. Die Mechanismen zum Nachweis der Originalität und Echtheit werden durch den Gerätehersteller implementiert.

Gemäß einer besonders vorteilhaften Ausgestaltung der Erfindung werden die Produktdaten einer Komponente in Anwendung einer bekannten kryptographischen Methode digital signiert. Anstelle der gesamten Produktdaten kann die erstellte digitale Signatur mit einem der jeweiligen Komponente zugeordneten Zertifikat zu einem erweiterten Zertifikat kombiniert werden. Ein auf diese Weise erweitertes Zertifikat bleibt vorteilhaft kompakt und eventuell bei der Übertragung in einem Automatisierungsnetzwerk zu beachtende Bandbreitenbegrenzungen werden nicht verletzt. Da das erweiterte Zertifikat beim Gerätehersteller in dessen Verantwortung erstellt wird, ist eine gegen Manipulationen geschützte und vertrauenswürdige Bereitstellung gewährleistet.

Gemäß einer weiteren vorteilhaften Ausgestaltung können bei der Inbetriebnahme der Anlage Produktdaten, die gegen Manipulationen geschützt jeweils in den Komponenten der Anlage hinterlegt sind, mittels des Engineering-Werkzeugs ausgelesen und mit den jeweils entsprechenden Produktdaten, welche zur Verwendung bei der Erstellung des Anlagenplans bereits vom Gerätehersteller bereitgestellt wurden, zur Erkennung fehlerhafter Abweichungen zwischen realer Anlage und dem in Form elektronischer Daten erstellten Anlagenplan verglichen werden. Somit kann auf zuverlässige Weise eine abschließende Prüfung bei der Inbetriebsetzung der Anlage durchgeführt werden, wobei die korrekte Umsetzung der Planung in die Realität bezüglich der technischen Eigenschaften der verwendeten Komponenten und deren Originalität anhand der erweiterten Zertifikate sichergestellt wird.

Anhand der Zeichnungen, in denen ein Ausführungsbeispiel der Erfindung dargestellt ist, werden im Folgenden die Erfindung sowie Ausgestaltungen und Vorteile näher erläutert. Es zeigen:
Figur 1 ein Beispiel für eine prozesstechnische Anlage und
Figur 2 ein Blockdiagramm zur Verdeutlichung von Teilen des Engineering-Verfahrens.

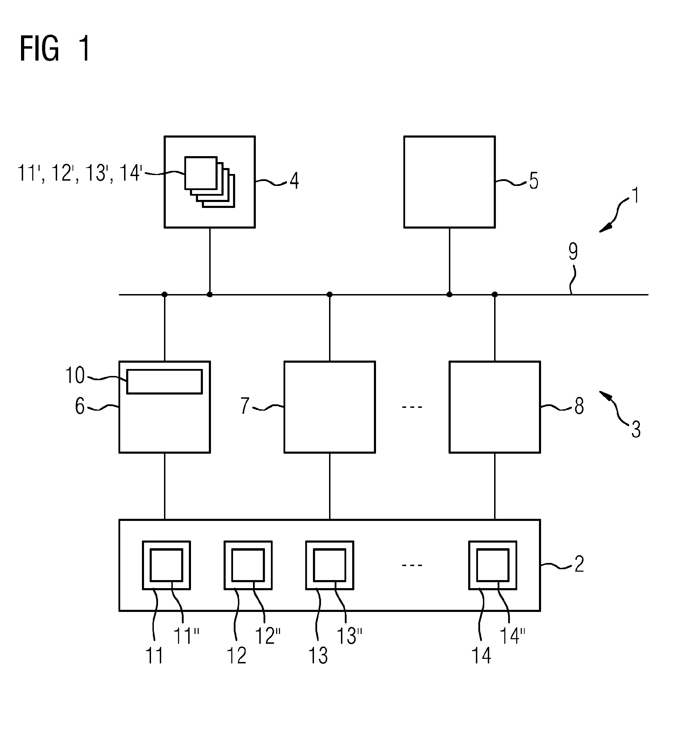

Figur 1 zeigt in vereinfachter schematischer Darstellung eine prozesstechnische Anlage 1, in der ein Prozess 2 mittels eines Automatisierungssystems 3 gesteuert wird. Das Automatisierungssystem 3 enthält ein Engineering-Werkzeug 4, ein Bedien- und Beobachtungsgerät 5 und eine Vielzahl von Automatisierungsgeräten 6, 7, 8, die über ein Bussystem 9 zur Datenkommunikation miteinander verbunden sind. Die Automatisierungsgeräte 6, 7, 8 steuern den technischen Prozess 2 nach Maßgabe von Automatisierungsprogrammen, von welchen beispielhaft in Figur 1 ein Automatisierungsprogramm 10 eingezeichnet ist. Zur Steuerung des Prozesses 2 werden vielfältige Feldgeräte 11, 12, 13, 14 als Komponenten zur Prozessinstrumentierung eingesetzt. Messumformer dienen zur Erfassung von Prozessvariablen, wie beispielsweise Temperatur, Druck, Durchflussmenge, Füllstand, Dichte oder Gaskonzentration eines Mediums. Durch Stellglieder kann der Prozessablauf in Abhängigkeit von erfassten Prozessvariablen beispielsweise den Vorgaben des Automatisierungsprogramms 10 entsprechend beeinflusst werden. Als Beispiele für Stellglieder seien ein Regelventil, eine Heizung oder eine Pumpe genannt.

Mittels des Engineering-Werkzeugs 4 wird in einer Phase der Anlagenplanung ein R&I-Fließbild der Anlage 1 erstellt, in welchem für den Betrieb der Anlage 1 erforderliche Komponenten und deren Verbindungen symbolisch dargestellt sind. Komponenten werden als graphische Prozessobjekte, Verbindungen als Linien zwischen den Prozessobjekten gezeichnet. Produktdaten, welche durch die jeweiligen Hersteller der Feldgeräte 11...14 vorbestimmte technische Eigenschaften der Komponenten der Anlage 1 beschreiben, werden dem Engineering-Werkzeug 4 zur Verwendung bei der Erstellung des Anlagenplans beispielsweise durch Einlesen von einem Datenträger oder durch Herunterladen von einer beim jeweiligen Hersteller der Feldgeräte 11...14 vorgehaltenen Datenbank mit den jeweiligen Stammdaten bereitgestellt. Die den jeweiligen Feldgeräten 11, 12, 13 und 14 zugeordneten Produktdaten 11', 12', 13' bzw. 14' sind in entsprechenden Dateien im Engineering-Werkzeug 4 abgespeichert. Jeweils in den Feldgeräten 11, 12, 13 und 14 sind um die Signaturen der Produktdaten 11', 12', 13' bzw. 14' erweiterte Zertifikate 11", 12", 13" bzw. 14" abgelegt, anhand welcher bei der Inbetriebnahme der Anlage 1 eine Überprüfung der Integrität sowie der Originalität der Produktdaten 11', 12', 13' bzw. 14' durchgeführt wird. Es ist in vorteilhafter Weise dadurch nicht möglich, die Produktdaten 11'...14' auf dem Weg durch die Planungsphasen der Anlage 1 unbemerkt zu verändern.

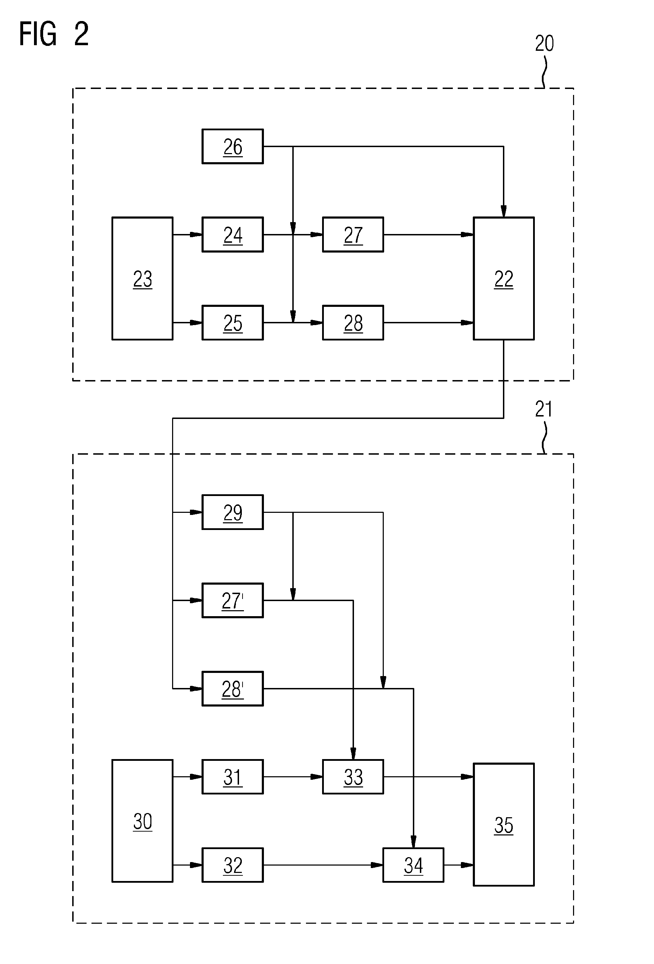

Anhand Figur 2 wird die Erstellung eines erweiterten Zertifikats sowie dessen Verwendung zur Überprüfung einer Anlage näher erläutert. Die Erstellung von Produktdaten beim Hersteller des Feldgeräts und deren Signatur wird im oberen Block 20 vorgenommen, deren Verwendung durch das Engineering-Werkzeug findet im unteren Block 21 statt.

Ein erweitertes Gerätezertifikat 22 (englisch: Device Certificate) dient zum Plagiatsschutz und zur Erbringung des so genannten Originalitätsbeweises (englisch: Proof of Originality). Es wird in der Fertigung beim Hersteller in einer geschützten Umgebung durch eine vertrauenswürdige Einrichtung (englisch: Certification Authority oder Issuing Plant, CA) generiert und in das zugeordnete Feldgerät geladen. In den nachfolgenden Phasen des Lebenszyklus des Feldgerätes ermöglicht das zugehörige Gerätezertifikat 22 die gesicherte Identifizierung des Geräts beim elektronischen Datenaustausch. Das erweiterte Gerätezertifikat 22 wird unter Verwendung eines zum Beispiel auf den so genannten elliptischen Kurven basierenden Signaturverfahrens mit Hilfe eines geräteinternen geheimen Schlüssels erstellt, wobei die Seriennummer des Geräts in die Signaturbildung mit einbezogen wird. Durch die Verifikation des Gerätezertifikats 22 bei der Inbetriebnahme einer Anlage bzw. während deren Betriebs wird geprüft, ob es sich bei dem jeweiligen Feldgerät tatsächlich um das Originalgerät mit der im Zertifikat 22 aufgeführten Seriennummer handelt. Falls die Prüfung fehlschlägt, handelt es sich bei dem Gerät gegebenenfalls um ein Plagiat.

Gerätezertifikate werden neben anderen Produktdaten in einer so genannten Stammdatenbank beim Gerätehersteller abgelegt. Das Produktmanagement des Geräteherstellers definiert gemeinsam mit der Geräteentwicklung diese Produktdaten bei der Entstehung eines neuen Geräts bzw. einer neuen Gerätefamilie. Bei den Produktdaten wird unterschieden zwischen Merkmalen, die den Gerätetyp beschreiben, und Merkmalen, die einem individuellen Gerät, das als Produktinstanz bezeichnet werden kann, zugewiesen werden. Beispiele für Merkmale des Gerätetyps sind: Höhe 5 cm, Breite 7 cm, Tiefe 3 cm und Bestellnummer 4711. Merkmale eines individuellen Geräts sind beispielsweise Seriennummer 0815, Eichdatum 01.01.2016 und Verlustleistung 7,3 Watt. Durch den Anwender des jeweiligen Feldgeräts können die Produktdaten zur Bereitstellung für sein Engineering-Verfahren aus der Stammdatenbank online bezogen oder von einem mit dem Gerät ausgelieferten Datenträger geladen werden. Für die Erstellung eines Anlagenplans mittels des Engineering-Werkzeugs benötigt der Anwender insbesondere die typspezifischen Merkmale, da der Gerätetyp den Anforderungen, denen das Feldgerät bei seinem Einsatz in der Anlage genügen muss, entsprechen muss. Auf der Basis dieser Produktdaten wird die Anlagenplanung weiter detailliert. Am Ende der Detailplanung steht die ausschreibungsfähige Anlage. Nun werden die Geräte beim Hersteller bzw. Lieferanten bestellt. Erst nachdem das Gerät produziert wurde, stehen für das Gerät die typ- und instanzspezifischen Produktmerkmale zur Verfügung. Bei der Inbetriebsetzung werden die Produktdaten, die der Planung der Anlage zugrunde lagen, mit den Produktdaten realer Geräte verglichen, um Unterschiede aufzudecken.

Beim Hersteller werden Produktdaten 23 des Geräts, die im Lebenszyklus des Geräts unverändert bleiben sollen und besonders schutzwürdig sind, zum Beispiel der maximale Mediendruck, dem das Feldgerät in einer Anlage bei Anschluss an eine medienführende Leitung ausgesetzt werden darf, in eine separate Klasse von Daten, beispielsweise mit dem Namen "High Protect", eingeordnet. Zur Beschreibung der technischen Eigenschaften des Feldgeräts in den Produktdaten 23 wird beispielsweise eine Beschreibung mit Merkmalen nach dem ECl@ss-Standard verwendet, beispielsweise Release 4.0 oder höher. Der ECl@ss-Standard ist ein hierarchisches System nach Art eines Klassifikationssystems und ist zur Gruppierung von Produkten und Dienstleistungen geeignet. Merkmale ermöglichen deren detaillierte Beschreibung und so eine Suche in verschiedenen Katalogen oder Datenbanksystemen. Die Merkmale werden durch Werte definiert. Jeweils angehängte Schlagwörter und Synonyme dienen dem schnellen, zielgerichteten Auffinden der Produktklassen und ihrer Merkmalleisten. Mit dem ECl@ss-Standard kann somit eine gut für das Verfahren geeignete Beschreibungssprache gewählt werden, durch welche eine Herstellerunabhängigkeit und Wiederverwendbarkeit der Produktdaten gewährleistet werden kann.

Alle der Klasse "High Protect" zugehörigen Produktdaten 23 werden in zwei Gruppen unterteilt:
1) die so genannte Typgruppe 24 enthält alle Produktdaten, die dem Gerätetyp zugeordnet werden können und
2) die so genannte Instanzgruppe 25 alle Merkmale, die sich von Instanz zu Instanz unterscheiden können.

Die Produktdaten der Typgruppe 24 sowie der Instanzgruppe 25 werden mit einem privaten Schlüssel 26 signiert und die jeweiligen Signaturen 27 bzw. 28 mit einem eventuell bereits vorhandenen Zertifikat kombiniert, so dass schließlich das erweiterte Gerätezertifikat 22 erhalten wird. Ebenso können die beiden Gruppen 24 und 25 der Produktdaten 23 miteinander konkateniert, das heißt aneinander gereiht, werden und mit dem Geheimschlüssel 26 des Geräts digital signiert werden. In der online verfügbaren Stammdatenbank des Herstellers werden die "High-Protect"-Produktdaten 23, die in die Typgruppe 24 und die Instanzgruppe 25 aufgeteilt sind, gemeinsam mit den Signaturen 27 und 28 ebenfalls abgelegt.

Ein Anlagenplaner verwendet zur Erstellung eines Anlagenplans in Form elektronischer Daten ein Engineering-Werkzeug, zum Beispiel COMOS der Siemens AG, und arbeitet dabei mit Anforderungen an ein Gerät, welche dieses erfüllen muss, um bestimmte Aufgaben innerhalb seiner Anlage und seiner Automatisierung zu bewältigen. Mit Hilfe dieser Anforderungen, die beispielsweise in einem PLT-Stellenblatt hinterlegt sind, entscheidet sich der Anwender schließlich für ein Gerät und beschafft sich zugehörige Produktdaten vom Hersteller. Dies kann online über ein Portal erfolgen. Bei diesen Produktdaten handelt es sich um die typspezifischen Eigenschaften, da das reale Gerät zu diesem Zeitpunkt noch nicht existiert bzw. noch nicht dem jeweiligen Anwender zugewiesen ist. Einzelne, besonders zu schützende Eigenschaften sind wiederum mit der Klasse "High Protect" gekennzeichnet, so dass diese später mit den entsprechenden Merkmalen in den Produktdaten des Echtgeräts verglichen werden können.

Zwischen den Produktdaten der Anlagenplanung und den Produktdaten 23 können aufgrund verschiedener Ursachen Unterschiede auftreten. So kann es zum Beispiel sein, dass zwischen dem Zeitpunkt der Beschaffung der Produktdaten für die Planung und der Fertigung des realen Geräts die Produktdaten durch den Hersteller geändert wurden. Eine andere Ursache kann sein, dass vorsätzlich oder unbeabsichtigt die Produktdaten in den Planungsphasen im Engineering-Werkzeug verändert wurden. Wenn die Planung der Anlage aufgrund derartiger Abweichungen auf der Basis falscher Produktdaten durchgeführt wird, kann es zu unerwarteten direkten oder indirekten Folgeerscheinungen bei der Inbetriebsetzung oder während des Betriebs der Anlage kommen, die schwerwiegend sein und eventuell zu einem Ausfall der Anlage führen können.

Bei der Inbetriebnahme des im Anlagenplan vorgesehenen und für die Anlage angeschafften Geräts wird daher zur Feststellung derartiger Abweichungen eine Prüfung der Originalität des Geräts durchgeführt. Dazu werden die vom Hersteller im erweiterten Gerätezertifikat 22 im jeweiligen realen Gerät abgespeicherten Signaturen 27' und 28' geladen. Das Auslesen der Zertifikate von einem Feldgerät kann beispielsweise mittels eines Parametrierwerkzeugs oder eines anderen Inbetriebsetzungswerkzeugs erfolgen, die im Rahmen dieser Anmeldung Komponenten des Engineering-Werkzeugs darstellen. Ist das Feldgerät bereits in ein Automatisierungsnetzwerk integriert, kann das Zertifikat aus dem Feldgerät zum Beispiel auch über das Engineering-Werkzeug (4 in Figur 1) geladen werden, welches dann über das Bussystem (9 in Figur 1) mit dem Feldgerät kommunikativ verbunden ist. Anschließend wird das erweiterte Zertifikat, das unter anderem die Signaturen 27' und 28` zu den Produktdaten der Typgruppe 24 bzw. zu den Produktdaten der Instanzgruppe 25, also zu den konkatenierten Produktdaten 23, sowie den öffentlichen Schlüssel 29 des Herstellers beinhaltet, ins Engineering-Werkzeug eingelesen. Die konkatenierten Produktdaten aus der Anlagenplanung 30, die wiederum in eine Typgruppe 31 und eine Instanzgruppe 32 untergliedert sind, werden in Blöcken 33 bzw. 34 durch die Verifikation anhand der Signaturen 27' bzw. 28' daraufhin geprüft, ob sie mit den Produktdaten 23 übereinstimmen. Falls die Prüfung scheitert, stimmen Produktdaten 30 der Planung mit Produktdaten 23 des Geräteherstellers nicht überein. Dann muss weiterhin geprüft werden, ob die Planung fehlerhaft ist oder ob ein falsches Gerät vorliegt, damit eventuell schwerwiegende Folgeerscheinungen bei der Inbetriebsetzung oder im Betrieb der mit dem jeweiligen Feldgerät als Anlagenkomponente ausgestatteten Anlage ausgeschlossen werden können.

Zur Dokumentation der in der Anlage verbauten Geräte können auch die instanzspezifischen Produktmerkmale, das heißt die Instanzgruppe 25, vom Gerätehersteller bezogen und in das Engineering-Werkzeug gespeichert werden. Auch bei diesem kann eine Prüfung, ob die Signaturen aus dem erweiterten Gerätezertifikat 22 des realen Geräts zu den Produktdaten aus der Planung, die der Instanzgruppe 32 zugeordnet sind, passen. Diese Prüfung kann von Zeit zu Zeit durchgeführt werden, um Manipulationen aufzudecken. Sie funktioniert auch noch Jahre später, wenn das Gerät bereits beim Hersteller abgekündigt und keine technischen Daten mehr vor diesem bezogen werden können.

## Patentansprüche

1. Engineering-Verfahren für eine verfahrens- oder prozesstechnische Anlage (1), wobei mittels eines Engineering-Werkzeugs (4) ein Anlagenplan in Form elektronischer Daten erstellt wird, welche die Anlage (1) und Komponenten (6...8, 11...14) der Anlage (1) beschreiben, wobei Produktdaten (11'...14'), welche vorbestimmte technische Eigenschaften der Komponenten (11...14) der Anlage (1) beschreiben, dem Engineering-Werkzeug (4) zur Verwendung bei der Erstellung des Anlagenplans bereitgestellt werden, **dadurch gekennzeichnet, dass** die Produktdaten (11'...14') durch eine kryptographische Methode zur Ermöglichung einer Überprüfung ihrer Integrität und/oder Originalität geschützt werden.

2. Engineering-Verfahren nach Anspruch 1, **dadurch gekennzeichnet, dass** Produktdaten (11'...14') einer Komponente (11...14) zu ihrem Schutz signiert werden und dass die dabei erstellte Signatur (27, 28) mit einem der jeweiligen Komponente (11...14) zugeordneten erweiterten Zertifikat (22) in einer Stammdatenbank bereitgestellt wird.

3. Engineering-Verfahren nach Anspruch 1 oder 2, **dadurch gekennzeichnet, dass** bei der Inbetriebnahme der Anlage (1) Produktdaten (23, 24, 25), die gegen Manipulationen geschützt jeweils in Komponenten (11...14) der Anlage (1) hinterlegt sind, mittels des Engineering-Werkzeugs (4) ausgelesen und mit den jeweils entsprechenden Produktdaten (30, 31, 32), welche zur Verwendung bei der Erstellung des Anlagenplans bereitgestellt wurden, zur Erkennung fehlerhafter Abweichungen verglichen werden.

4. Engineering-Werkzeug für eine verfahrens- oder prozesstechnische Anlage, welches dazu ausgebildet ist, einen Anlagenplan in Form elektronischer Daten, welche die Anlage (1) und Komponenten (6...8, 11...14) der Anlage (1) beschreiben, zu erstellen, wobei Produktdaten (11'...14'), welche vorbestimmte technische Eigenschaften der Komponenten (11...14) der Anlage (1) beschreiben, dem Engineering-Werkzeug (4) zur Verwendung bei der Erstellung des Anlagenplans bereitgestellt sind, **dadurch gekennzeichnet, dass** die Produktdaten (11'...14') durch eine kryptographische Methode zur Ermöglichung einer Überprüfung ihrer Integrität und/oder Originalität geschützt sind.

5. Komponente zur Verwendung bei einem Engineering-Verfahren nach einem der Ansprüche 1 bis 3, **dadurch gekennzeichnet, dass** in der Komponente (11...14) der Komponente zugeordnete Produktdaten (11"...14") durch eine kryptographische Methode zur Ermöglichung einer Überprüfung ihrer Integrität und/oder Originalität geschützt hinterlegt sind.
